# EUROPÄISCHE PATENTSCHRIFT

(11) **EP 1 792 932 B1**
(45) Veröffentlichungstag und Bekanntmachung des Hinweises auf die Patenterteilung: **01.06.2011**
(21) Anmeldenummer: 05405681.7
(22) Anmeldetag: 01.12.2005
(51) Int. Cl.: C08J 5/00

(54) **Medienführendes Bauelement**
Element for transporting media
Elément de transport des substances

(43) Veröffentlichungstag der Anmeldung: 06.06.2007
(73) Patentinhaber: R. Nussbaum AG, 4601 Olten (CH)
(72) Erfinder: Zeiter, Patrik, 4853 Riken (CH)
(74) Vertreter: Rüfenacht, Philipp Michael

(56) Entgegenhaltungen:
- EP-A- 1 035 163
- WO-A-01/68752
- WO-A-91/11489
- WO-A-03/079763
- DE-A1- 2 927 446
- GB-A- 2 250 996
- US-A- 6 083 586
- US-A1- 2004 071 912
- US-B1- 6 913 696

## Beschreibung

### Technisches Gebiet

Die Erfindung betrifft ein Verfahren zur Herstellung eines medienführenden Bauelements, insbesondere einer Armatur, eines Fittings oder eines Rohrs, wobei zunächst eine Form geformt wird, insbesondere durch Spritzguss, und wobei anschliessend die Form vernetzt wird, insbesondere strahlenvernetzt.

### Stand der Technik

Medienführende Bauelemente wie Armaturen, Fittings oder Rohre haben breite Anwendungsbereiche. Sie dienen zum Transport, zur Verteilung, Regelung, Filterung und zur Abgabe von flüssigen und/oder von gasförmigen Medien und haben unter anderem Anwendungen in der Wasserversorgung (inkl. Hausverteilung), der Kanalisation oder der Industrie.

Armaturen haben primär Absperr-, Regel- oder Ventilfunktionen. Es sind bereits eine Mehrzahl von Materialien bekannt, welche zur Fertigung von Armaturen geeignet sind. Seit längerem bekannt sind insbesondere Armaturen aus Metallen wie Messing, Rotguss oder Edelstahl. Seit einiger Zeit sind auch Armaturen aus Kunststoff, insbesondere aus Polypropylen (PP), Polyvinylchlorid (PVC) oder technischen Kunststoffen wie Polysulfon (PSU) auf dem Markt.

Auch der Grundkörper von Fittings kann aus verschiedenen Materialien gefertigt sein, z. B. aus einem der folgenden:
a) Rotguss;
b) Messing;
c) Edelstahl;
d) Polyvinylidenfluorid (PVDF), vgl. EP 0 390 747 A1 (Geberit);
e) Polyphenylsulfon (PPSU), vgl. WO 03/012328 A1 (Uponor);
f) Polyphthalamid (PPA; erhältlich beispielsweise unter dem Namen GRIVORY® von der Firma EMS-GRIVORY).

Schliesslich existieren auch für Rohre Lösungen mit unterschiedlichen Materialien. Metallrohre sind beispielsweise aus Edelstahl, Kupfer oder verzinktem Stahl hergestellt, Kunststoffrohre aus Polyethylen (PE), Polypropylen (PP), Polybutylen (PB), PE-RT (WO 2005/080077 A2, Uponor) oder Verbundmaterialien.

Metallrohre sind nur bedingt korrosionsresistent, besonders in den Bereichen entlang der Längsschweissnähte, und werden beispielsweise durch Chlorverbindungen angegriffen. Eine bessere Korrosionsbeständigkeit bieten üblicherweise Kunststoffe. Einfache Kunststoffe wie Polyolefine (PE, PP, PB) sind zudem kostengünstig und einfach zu verarbeiten. Allerdings ist insbesondere Polyethylen nicht für Heisswasseranwendungen geeignet, weil seine Temperaturbeständigkeit dafür nicht ausreicht. Polybutylen wird bei tiefen Temperaturen spröde und lässt sich somit nur noch schlecht verarbeiten. Technische Kunststoffe wie PPSU oder PVDF weisen eine gute Temperatur- und Chemikalienbeständigkeit auf, sind aber sehr teuer.

Die GB 2 250 996 A (Lycab) beschreibt eine Materialzusammensetzung aus Elastomeren in Verbindung mit Keramik; die Keramik kann in Form eines Gewebes oder als Fasern in das Elastomer eingebracht werden. Die Materialzusammensetzung weist eine wesentlich verbesserte Hitzebeständigkeit der Verbindung in Hinblick auf Durchleitungssysteme auf (Feuer- und Hitzeschutz).

Die US 2004/071912 A1 (J. M. Berth) bezieht sich auf ein Verfahren zur Verbesserung der Feuerbeständigkeit von Polyethylen(PE)-Rohren und auf PE-Rohre, die nach diesem Verfahren erzeugt wurden. Sie beinhaltet unter anderem PE-, vernetzte PE- und PE-basierte Polymerzusammensetzungen, die chemisch durch Pfropfcopolymerisation an eine PE-Oberfläche (Substrat) gebunden sind, auf die sie aufgetragen wurden. Eine Verstärkung durch ein Glasfasernetz bzw. ein Glasfasergranulat auf der auf das Substrat aufgetragenen Polymerzusammensetzung und anschliessend ggf. erneutes Auftragen und Aushärten der Polymerzusammensetzung ist weiter vorgesehen. Rohrleitungen und -verzweigungen werden als mögliche Anwendungen zitiert.

In den letzten Jahren nimmt auch die Verwendung von verstärkten Kunststoffen zu, d. h. von Kunststoffen mit eingelagerten Fasern (z. B. Glasfasern, Kohlefasern etc.) oder so genannten Nanostrukturen. Diese Kunststoffe zeichnen sich durch eine hohe Festigkeit und gegebenenfalls Steifigkeit aus. Im technischen Gebiet der Erfindung ist beispielsweise die Verwendung von glasfaserverstärktem Fortron® (Polyphenylensulfid, PPS) für Wasserzählergehäuse bekannt. Ebenfalls bekannt sind aus der EP 1 022 504 A1 (JRG Gunzenhauser AG) Klemmverbinder aus einem Verbundwerkstoff, bei welchem eine innere Schicht aus PPSU, die äussere Schicht aus glasfaserverstärktem Polyamid gefertigt sind. Nanostrukturen, so genannte Nanofiller, welche anstelle von Fasern in eine Kunststoffmatrix eingebracht werden können, sind beispielsweise in der Form von "Nanotubes", rohrförmige Strukturen mit Durchmessern im Bereich von 1 nm, oder als "Nanoclays", plättchenförmigen Strukturen mit nanoskopischer Dicke, verfügbar, vgl. WO 2004/033549 A1 (Borealis).

Unabhängig davon ist es bei Rohren bekannt, vernetzte Materialien einzusetzen.

Die WO 91/11489 A1 (Stamicarbon) beschreibt verschiedene oligomerische Acrylmischungen, die sich zur Produktion unendlich ausgedehnter Objekte eignen, insbesondere für die Produktion von Fasern oder Rohren. Zum Acryl wird erfindungsgemäss ein thermoplastisches Polymer gegeben. Es wird erwähnt, dass Fasern (z. B. Glasfasern) in die Stoffmischung eingebracht werden können. Das Material kann z. B. mittels thermischer, UV, anderer elektromagnetischer Strahlung, Elektronen- oder Gamma-Bestrahlung vernetzt werden.

Weiter ist es bekannt, vernetztes Polyethylen (PE) einzusetzen, vgl. z. B. EP 0 071 828 (Hewing). Diese Materialien werden gemeinhin als PEx (Polyethylene crosslinked) bezeichnet. Bei der Vernetzung werden (zusätzliche) Verbindungen zwischen den vorwiegend linearen Makromolekülen des Polymers geschaffen, wodurch sich eine erhöhte Form- und Temperaturbeständigkeit des Materials ergibt. Auch die Härte und die Chemikalienbeständigkeit können erhöht werden. Aus der EP 1 524 108 A1 (Geberit Technik AG) ist es ebenfalls bekannt, Rohre aus einem Verbund mit einer (vernetzten) PEx-Aussenschicht und einer (unvernetzten) PE-Innenschicht zu fertigen.

Die Vernetzung kann auf unterschiedliche Art erfolgen (vgl. Winfried Hamich, PEX- Heiz- und Sanitärrohre, eine weltweite Bestands- und Entwicklungsanalyse, www.kwd-online.de), insbesondere durch
a) Peroxid-Vernetzung;
b) Silan-Vernetzung;
c) Strahlvernetzung.

Beim letzteren Verfahren werden die Werkstücke mittels Elektronenstrahlen oder Gamma-strahlen (z. B. einer Kobalt-60-Quelle) bestrahlt, so dass bestehende kovalente Bindungen aufgebrochen und neue Bindungen zwischen benachbarten Makromolekülen gebildet werden.

Die Vernetzung ermöglicht die Herstellung von heisswasserbeständigen Rohren aus dem kostengünstigen Werkstoff Polyethylen. Bei Rohren ist eine gewisse Flexibilität durchaus erwünscht; bei Armaturen und Fittings wird aber üblicherweise eine hohe Festigkeit gefordert. Die mechanischen Eigenschaften von PEX erlauben somit keine Anwendung dieses Materials für Fittings oder Armaturen. Auch zur Herstellung von Rohren mit erhöhter Formstabilität müssen andere Materialien oder Verbunde mit PEX und einem anderen, formstabileren Material verwendet werden, z. B. ein PEX/Aluminium/PEX-Verbund.

### Darstellung der Erfindung

Aufgabe der Erfindung ist es, ein dem eingangs genannten technischen Gebiet zugehörendes Verfahren zur Herstellung eines medienführendens Bauelements zu schaffen, welches die kostengünstige Herstellung langlebiger, korrosionsbeständiger und, formstabiler Bauelemente ermöglicht, die kompliziert geformt sein können und auch , kostengünstig herstellbar und auch für Heisswasseranwendungen geeignet sind.

Die Lösung der Aufgabe ist durch die Merkmale des Anspruchs 1 definiert. Gemäss der Erfindung wird die Form aus einem extrudierbaren, vernetzbaren, faser- oder nanostrukturverstärkten Polyolefin geformt, und zwischen dem Schritt des Formens und dem Schritt des Vernetzens werden mehrere Formen miteinander verschweisst. Das Formen erfolgt bevorzugt mittels Spritzguss. Als Polyolefin wird bevorzugt Polyethylen gewählt.

Mit dem erfindungsgemässen Verfahren lassen sich formstabile und heisswasserbeständige Armaturen, Fittings und Rohre herstellen. Die Bauelemente können insbesondere derart ausgebildet werden, dass sie den Standard PN16 (25 bar Prüfdruck) erfüllen und für Heisswasser bis mindestens 95 °C langzeitbeständig sind; eine erwünschte Lebensdauer in der Grössenordnung von 50 Jahren kann erreicht werden. Polyolefine sind Polymerisate von Olefin-Kohlewasserstoffen (Alkenen), insbesondere des Ethylens (Polyethylen, PE) und des Propylens (Polypropylen, PP), weiter auch des Isobutylens, Buten-1 etc. sowie Copolymere solcher Monomere mit anderen Monomeren, wobei die Olefine den grössten Masseanteil ausmachen.

Die Ausgangsmaterialien, insbesondere Polyethylen (PE) oder Polypropylen (PP), sowie Fasern bzw. Nanofiller sind kostengünstig; die Vernetzung lässt sich bei grossen Stückzahlen ebenfalls ökonomisch durchführen, so dass die hergestellten Produkte, insbesondere Armaturen und Fittings, deutlich günstiger herstellbar sind als bei der Verwendung von technischen Kunststoffen.

Formstabile Rohre können aus einem einzigen Kunststoff hergestellt werden, aufwändige Verbundwerkstoffe erübrigen sich somit.

Die verwendeten Materialien gelten als gesundheitlich unbedenklich, ihrem Einsatz zur Herstellung von Bauelementen für die Trinkwasserversorgung steht deshalb nichts entgegen. Polyethylen ist besonders gut für die genannten Anwendungen geeignet und besonders in grossen Mengen zu äusserst geringen Kosten erhältlich.

Die nach dem erfindungsgemässen Verfahren hergestellten Rohre, Fittings und Armaturen sind besonders für die Trinkwasserversorgung, insbesondere die Verteilung im Hausbereich und insbesondere für Heisswasser führende Elemente, geeignet. Das erfindungsgemässe Material erlaubt die Herstellung von Armaturengehäusen für verschiedenste Armaturen wie Niederschraubventile (Schrägsitz und Geradsitz), Kugelhähne, Wasserverteiler etc. sowie von Grundkörpern verschiedenster Fittings wie Steck-, Klemm- oder Pressverbinder. Anwendungen ergeben sich auch in der Gasverteilung. Der im Rahmen des erfindungsgemässen Verfahrens eingesetzte Werkstoff ermöglicht die Herstellung von Armaturen, bei welchen auch Anschlussteile in der Form von Stütznippeln (z. B. für Pressverbindungen) oder Gewinden einstückig aus demselben Material ausgebildet sind. Neben dem Armaturengehäuse können auch weitere Elemente der Armatur aus dem Werkstoff gefertigt werden, beispielsweise Bauteile von Ventileinsätzen wie Ventilteller oder die Kugel eines Kugelventils. Neben dem Grundkörper eines Fittings können weitere Elemente des Fittings, wie z. B. Steckhülsen, aus dem Material hergestellt werden.

Weil sich die Polyolefine als Thermoplaste einfach verarbeiten lassen, stehen für den Schritt des Formens viele verschiedene erprobte Verfahren zur Verfügung, neben dem Spritzguss auch z. B. das Formpressen oder Blasformen. Diese Verfahren ermöglichen die rationelle Fertigung von Formkörpern verschiedenster Komplexität.

Für die Vernetzung ist die Strahlenvernetzung bevorzugt, weil nicht wie in chemischen Vernetzungsverfahren (z. B. Peroxid-Vernetzung) Chemikalien eingesetzt werden müssen, welche in den Bauelementen geführte Medien kontaminieren und z. B. im Trinkwasser ein Gesundheitsrisiko bedeuten oder zu einer geruchlichen oder geschmacklichen Beeinträchtigung führen könnten. In einer Strahlenvernetzungsanlage lassen sich zudem grosse Mengen von Bauelementen gleichzeitig und somit wirtschaftlich vernetzen. Die Strahlenvernetzung erfolgt insbesondere mittels beta-Strahlen (Elektronenstrahlvernetzung), welche hohe Dosisleistungen und somit kurze Bestrahlungszeiten ermöglicht. Bei komplex aufgebauten Bauteilen kann die Vernetzung auch mittels gamma-Strahlen (einer Kobalt-60-Quelle) erfolgen; diese weisen eine höhere Durchdringfähigkeit auf, bedingen aber längere Bestrahlungszeiten. Bei durchgeführten Versuchen hat sich herausgestellt, dass die mechanischen Eigenschaften des Fasermaterials durch die Strahlenvernetzung nicht beeinträchtigt werden, je nach applizierter Dosis und verwendetem Fasermaterial resultiert allenfalls eine gewisse Verfärbung. Die Vernetzung des faserverstärkten Kunststoffs führt zudem zu einer Verbesserung der Faser-Matrix- bzw. der Nanofiller-Matrix-Anhaftung, so dass die Fasern bzw. Nanostrukturen besser in der Matrix verankert sind. Durch die Vernetzung werden somit gleichzeitig auch die vorteilhaften Effekte der Verstärkung unterstützt. Die bei Faserverbundkunststoffen oftmals notwendige Vorbehandlung der Fasern (z. B. durch Aufrauhen oder Silanisieren) erübrigt sich beim erfindungsgemässen verstärkten und vernetzten Material zudem in der Regel, so dass die Herstellung zusätzlich vereinfacht wird.

Vor dem Vernetzen lässt sich das verwendete Polyolefin-Material einfach verschweissen, nach der Vernetzung hingegen ist dies je nach Vernetzungsgrad stark erschwert. Zur Herstellung kompliziert geformter Bauelemente, insbesondere von Armaturen, werden deshalb zunächst verhältnismässig einfache Komponenten aus dem Polyolefin hergestellt, beispielsweise mittels Spritzguss. Diese werden anschliessend zum gewünschten Bauelement verschweisst. Das verschweisste Bauelement wird dann einer Vernetzung unterzogen. Im Rahmen dieses Verfahrensschritts wird die Festigkeit der Schweissnähte zusätzlich erhöht. Dieses Vorgehen ermöglicht neben der Herstellung von komplexen Elementen, welche sich nicht in einem Schritt formen lassen, eine Fertigung verschiedenster Bauelemente mit einer minimalen Anzahl von (teuren) Spritzguss- oder anderen Formen.

Am Bauelement können einstückig Gewindeabschnitte aus dem vernetzten faser- oder nanostrukturverstärkten Polyolefin ausgebildet sein. Solche Aussen- oder Innengewinde können als Verbindungselemente zu einem nachfolgenden Bauteil dienen, als Aufnahme für einen Einsatz (z. B. eine Ventilspindel) oder auch dazu - beispielsweise anstelle einer Schweissung -, verschiedene Bauteile eines komplex aufgebauten Bauelements miteinander zu verbinden. Das erfindungsgemässe verstärkte und vernetze Material ermöglicht eine sichere Schraubverbindung, welche hohe Kräfte in Längsrichtung aufnehmen kann.

Vor dem Vernetzen können überdies Dichtungen bzw. Dichtflächen aus einem kautschukartigen Material (z. B. EPDM oder NBR) an der Form angeordnet werden. Im Rahmen des Vernetzungsprozesses, insbesondere einer Strahlenvernetzung, werden diese Dichtungen vulkanisiert. Im Rahmen der Herstellung der Form können auf diese Weise beispielsweise Dichtflächen aus EPDM in einem 2-Komponenten-Spritzgiessverfahren (durch Koextrusioin) angeformt werden. Die anschliessende Vulkanisierung der Dichtflächen im Rahmen des Vernetzungsschritts bedeutet keinerlei Zusatzaufwand. Die Verarbeitung ist somit ähnlich einfach wie diejenige von Dichtmaterialien wie thermoplastischen Elastomeren (TPE).

Das Aufvulkanisieren angeformter Dichtflächen oder eingesetzter Dichtelemente (wie z. B. O-Ringe) aus kautschukartigen Materialien gewährleistet im Weiteren, dass die Dichtflächen bzw. Dichtelemente am Basismaterial anhaften und sich somit eine zuverlässige Abdichtung erreichen lässt.

Das verwendete Polyolefin ist mit Vorteil langfaserverstärkt, d. h. es enthält Fasern, insbesondere Glasfasern, mit einer Länge von mindestens 1 mm. Der Verstärkungsgrad, d. h. der Gewichtsanteil der Fasern beträgt vorzugsweise zwischen 15 und 60 Gew.%. Der Durchmesser von verwendbaren Glasfasern beträgt beispielsweise ca. 10-15 µm. Gegenüber üblichen Fasern mit Längen von 0.5 mm oder weniger ergibt sich eine höhere Festigkeit, Steifigkeit und Schlagzähigkeit des Materials. Weitere Vorteile sind ein geringerer Verzug und damit eine höhere Formtreue. Derartige Langfasermaterialien stehen heute als compoundierte Granulate bzw. als Stäbchengranulate zur Verfügung und lassen sich heute auch im Rahmen von Spritzgussverfahren verarbeiten. Der Faseranteil lässt sich durch Mischen eines Granulats ("Masterbatch") mit hohem Faseranteil (bis ca. 80 Gew.%) mit einem reinen Kunststoffgranulat auf einfache Weise einstellen.

Alternativ werden Kurzfasern verwendet. Diese ermöglichen nicht ganz so hohe Festigkeiten, sind aber insbesondere bei der Herstellung von filigranen Teilen einfacher zu verarbeiten.

Die verwendeten Fasern sind mit Vorteil Glasfasern. Diese zeichnen sich durch eine hohe Zugfestigkeit aus und sind vergleichsweise kostengünstig. Alternativ sind auch Kohle-, Aramid- oder Cellulosefasern bzw. Polyacrylnitrilfasern (PAN-Fasern) einsetzbar oder Naturfasern wie z. B. Hanf-, Flachs- oder Sisalfasern.

Anstelle von Fasern können mit Vorteil auch Nanostrukturen (sog. "Nanofillers") wie Nanotubes oder Nanoclays eingesetzt werden. Diese Strukturen zeichnen sich durch eine enorme Zugfestigkeit und eine grosse Elastizität aus. Aufgrund des grossen Verhältnisses zwischen Oberfläche und Volumen haften sie zudem besonders gut am Matrixmaterial an.

Aus der nachfolgenden Detailbeschreibung und der Gesamtheit der Patentansprüche ergeben sich weitere vorteilhafte Ausführungsformen und Merkmalskombinationen der Erfindung.

### Wege zur Ausführung der Erfindung

Zur erfindungsgemässen Herstellung eines medienführenden Bauelements, also beispielsweise einer Armatur, eines Fittings oder eines Rohrs wird zunächst das im Rahmen eines Formungsprozesses zu verarbeitende Ausgangsmaterial (der sogenannte Compound) bereitgestellt. Dieses ist ein extrudierbares, vernetzbares, faser- oder nanostrukturverstärktes Polyolefin. Als Grundpolymere eines Compounds einsetzbar und im Handel problemlos verfügbar sind insbesondere Polyethylen (PE) und Polypropylen (PP). Diese Stoffe können beispielsweise als Granulate oder auch in Griessform bezogen werden. Das verwendete Material wird abhängig von den Anforderungen an das herzustellende Element ausgewählt, im Fall von Polyethylen kann beispielsweise zwischen Polyethylen mittlerer Dichte (MDPE) und Polyethylen hoher Dichte (HDPE) gewählt werden. Alternativ stehen weitere PE-Materialien wie MDPE, LLDPE, VLDPE oder ULDPE zur Verfügung. Für Armaturen, Fittings und Rohre dürfte zumeist HDPE zum Einsatz kommen.

Um die spätere Vernetzung zu erleichtern und zu beschleunigen, werden dem Grundpolymer entsprechende, an sich bekannte Zusatzstoffe beigegeben. Im Fall der Strahlenvernetzung kann beispielsweise wie es in der EP 0 071 828 A2 (Hewing GmbH & Co.) beschrieben ist, dem Granulat des Grundmaterials eine gewisse Menge Ethylen-Vinylacetat-Copolymer (EVA, z. B. Lupolen V 3510 K oder Lupolen 3902 D von basell mit 18 Gew.% Vinylacetat) als Vernetzungsverstärker zugegeben werden, bis die Polyolefin-Formmasse einen Gehalt von 0.3-20 Gew.% an Vinylacetat aufweist. Dieser Zusatzstoff bewirkt eine Verbesserung der Vernetzung unter Vermeidung von Ladungsansammlungen im Innern der Werkstücke. Weitere Vernetzungsverstärker, welche anstelle des EVA-Copolymers eingesetzt werden können, sind bekannt und im Handel erhältlich, z. B. der Zusatzstoff BETA-LINK® der Firma PTS Plastic Technologie Service Marketing- & Vertriebs-GmbH, Adelshofen/Tauberzell (Deutschland).

Die Faser- oder Nanostrukturverstärkung erfolgt durch die Zugabe von entsprechendem Granulat mit Faser- bzw. Nanostrukturgehalt. Dieses steht üblicherweise als sogenannter Masterbatch zur Verfügung, welcher einen hohen Faser- bzw. Nanostrukturanteil enthält und dessen zugegebene Menge abhängig vom gewünschten Faser- bzw. Nanostrukturan teil des Compounds gewählt wird. Für die Verstärkung mit Langglasfasern wird dem Granulat des Grundmaterials beispielsweise die entsprechende Menge eines pultrudierten Stäbchengranulats mit Glasfasern eines Durchmessers von ca. 10 µm und der gewünschten Faserlänge (z. B. 10mm oder 25mm) zugegeben. Beim Stäbchengranulat handelt es sich im Prinzip um Glasfaserstränge, die mit einer Kunststoffhülle umgeben sind. Es lässt sich zusammen mit dem Granulat des Grundmaterials und auch des zugegebenen EVA direkt in einem Extruder einer Spritzgiessmaschine verarbeiten.

Dem Grundpolymer werden ausserdem je nach Bedarf weitere Zusatzstoffe wie Antioxidantien, Farbstoffe (z. B. Carbon Black), Flammschutzmittel, Chlor-Resistenzmittel oder Stabilisatoren zugegeben.

Durch Spritzguss werden die gewünschten Formen bzw. Teile davon hergestellt. Die Formgebung entspricht bekannten entsprechenden Bauelementen. Die Bauelemente werden aus mehreren einfacheren Spritzgussteilen zusammengefügt, wobei die einzelnen Teile mittels Schweissnähten verbunden werden. Zum Schweissen von Thermoplasten wie PE oder PP stehen eine Reihe von Verfahren zur Verfügung, z. B. Heizelement-, Infrarot-, Laser- oder Vibrationsschweissen.

Sollen die Bauelemente Dichtflächen aufweisen, so können diese während des Formens durch Mehrkomponenten-Spritzguss auf die entsprechenden Flächen aufgebracht werden. Als Material eignen sich insbesondere EPDM oder NBR. Dichtflächen können auch durch übliche Dichtringe aus kautschukartigen Materialien gebildet werden. Diese werden bereits nach dem Formen (und gegebenenfalls Fügen) in nicht-vulkanisierter Form am Formteil angebracht.

Als Nächstes erfolgt die Vernetzung des Kunststoffmaterials. Zur Strahlenvernetzung werden die geformten Teile (mit Vorteil in grossen Mengen) in eine entsprechende Anlage gebracht. Besonders geeignet ist die Vernetzung mit Elektronenstrahlen (beta-Strahlung). Für die Vernetzung von glasfaserverstärktem Polyethylen sind grundsätzlich Bestrahlungsdosen von 50-200 kGy geeignet, bevorzugt wird eine Dosis im Bereich 80-120 kGy gewählt.

Im Rahmen des Vernetzungsvorgangs werden die angeformten Dichtflächen oder die angebrachten Dichtringe auf das Formteil aufvulkanisiert, d. h. neben den üblichen Auswir kungen der Vulkanisation auf das kautschukartige Material ergibt sich eine starke Anhaftung der Dichtfläche bzw. des Dichtrings am Grundmaterial des Formteils.

Nach der Vernetzung sind die Bauelemente fertig gestellt und können ihrer Verwendung zugeführt werden.

In der folgenden Tabelle sind einige Beispiele von verwendbaren Materialzusammensetzungen sowie Verfahrensparameter der Vernetzung zusammengestellt. Die Vernetzung erfolgt jeweils auf einer 2.5 MeV / 40mA-Elektronenstrahl-Vernetzungsanlage.

| Nr. | Polyolefin | Zusatzstoffe | Verstärkung | Bestrahlungs- dosis | Produkt |
|---|---|---|---|---|---|
| 1 | HDPE basell Lupolen 4261 A | Ethylen-Vinylacetat-Copolymer, 5 Gew.% Vinylacetat im Compound 0.5 Gew.% Antioxidantien | 20 Gew.% Glasfasern, Ø 10 µm, Länge 10 mm | 100 kGy | Rohr, FittingGrundkörper |
| 2 | HDPE basell Lupolen 4261 1 A | Ethylen-Vinylacetat-Copolymer, 5 Gew.% Vinylacetat im Compound; 0.5 Gew.% Antioxidantien | 10 Gew.% clay nanofiller | 100 kGy | Rohr, Fitting-Grundkörper |
| 3 | HDPE basell Lupolen 4261 A | Ethylen-Vinylacetat-Copolymer, 5 Gew.% Vinylacetat im Compound; 0.5 Gew.% Antioxidantien | 2 Gew.% Kohlenstoff-Nanotubes | 100 kGy | Fitting-Grundkörper, Armaturengehäuse |
| 4 | HDPE basell Lupolen 4261 A | Ethylen-Vinylacetat-Copolymer, 4 Gew.% Vinylacetat im Compound; 0.5 Gew.% Antioxidantien | 30 Gew.% Glasfasern, Ø 10 µm, Länge 25 mm | 120 kGy | Fitting-Grundkörper, Armaturengehäuse |
| 5 | HDPE DOWLEX BG 2340 | Ethylen-Vinylacetat-Copolymer, 4 Gew.% Vinylacetat im Compound; 0.5 Gew.% Antioxidantien | 30 Gew.% Glasfasern, Ø 10 µm, Länge 25 mm | 120 kGy | Fitting-Grundkörper, Armaturengehäuse |
| 6 | HDPE DOWLEX BG 2340 | Ethylen-Vinylacetat-Copolymer, 4 Gew.% Vinylacetat im Compound; 0.5 Gew.% Antioxidantien | 30 Gew.% Glasfasern, Ø 10 µm, Länge 0.4 mm | 120 kGy | Armaturengehäuse |
| 6 | HDPE Borealis BorPEX HE 2590 | | 20 Gew.% Glasfasern, Ø 10 µm, Länge 10 mm | 110 kGy | Fitting-Grundkörper, Armaturengehäuse |
| 7 | HDPE Borealis BorPEX HE 2595 gefärbt (enthält 2.2 % Carbon Black) | | 20 Gew.% Glasfasern, Ø 10 µm, Länge 10 mm | 110 kGy | Fitting-Grundkörper, Armaturengehäuse |
| 8 | MDPE Borealis BorPEX ME 2592 | | 20 Gew.% Glasfasern, Ø 10 µm, Länge 10 mm | 100 kGy | Rohr |
| 9 | MDPE Borealis BorPEX ME 2592 | | 35 Gew.% Glasfasern, Ø 10 µm, Länge 10 mm | 110 kGy | Armaturengehäuse, Fitting-Grundkörper |

Je nach den benötigten mechanischen Eigenschaften des Endprodukts lassen sich die Material- und Verfahrensparameter im Rahmen der Erfindung variieren.

Anstelle des Ethylen-Vinylacetat-Copolymers lassen sich im Rahmen der Erfindung grundsätzlich auch andere Stoffe als Vernetzungsbeschleuniger einsetzen. Die Erforschung entsprechender Zusammensetzungen dauert an, und es ist zu erwarten, dass in näherer Zukunft Alternativen zum EVA-Copolymer zur Marktreife gelangen.

Zusammenfassend ist festzustellen, dass durch die Erfindung ein Verfahren zur Herstellung eines medienführenden Bauelements geschaffen wird, welches die kostengünstige Herstellung langlebiger, korrosionsbeständiger und, formstabiler Bauelemente ermöglicht, die kompliziert geformt sein können und auch , kostengünstig herstellbar und auch für Heisswasseranwendungen geeignet sind.

## Patentansprüche

1. Verfahren zur Herstellung eines medienführenden Bauelements, insbesondere einer Armatur, eines Fittings oder eines Rohrs, wobei zunächst eine Form geformt wird, insbesondere durch Spritzguss, und wobei anschliessend die Form vernetzt wird, insbesondere strahlenvernetzt, **dadurch gekennzeichnet, dass** die Form aus einem extrudierbaren, vernetzbaren, faser- oder nanostrukturverstärkten Polyolefin, insbesondere Polyethylen, geformt wird und dass zwischen dem Schritt des Formens und dem Schritt des Vernetzens mehrere Formen miteinander verschweisst werden.

2. Verfahren nach Anspruch 1, **dadurch gekennzeichnet, dass** nach dem Formen und vor dem Vernetzen eine Dichtung bzw. eine Dichtfläche aus einem kautschukartigen Material an der Form angeordnet wird, welche anschliessend im Rahmen des Vernetzungsprozesses vulkanisiert wird.

3. Verfahren nach Anspruch 1 oder 2, **dadurch gekennzeichnet, dass** das Polyolefin langfaserverstärkt ist mit Fasern einer Länge von mindestens 1 mm.

4. Verfahren nach einem der Ansprüche 1 bis 3, **dadurch gekennzeichnet, dass** die Fasern Glasfasern sind.

5. Verfahren nach Anspruch 4, **dadurch gekennzeichnet, dass** das Polyolefin mittels Nanotubes oder Nanoclays verstärkt ist.

6. Verfahren nach einem der Ansprüche 1 bis 5, **dadurch gekennzeichnet, dass** das Vernetzen mittels Strahlenvernetzung erfolgt.

7. Verfahren nach einem der Ansprüche 1 bis 6, **dadurch gekennzeichnet, dass** am Bauelement einstückig Gewindeabschnitte aus dem vernetzten faser- oder nanostrukturverstärkten Polyolefin ausgebildet werden.

## Claims

1. Process for the production of a medium-bearing building component, in particular a device, a fitting or a pipe, wherein firstly a moulding is formed, in particular by injection moulding, and wherein next the moulding is crosslinked, in particular radiation crosslinked, **characterized in that** the moulding is shaped from an extrudable, crosslinkable, fibre- or nanostructure-reinforced polyolefin, in particular polyethylene, and that between the forming step and the crosslinking step several mouldings are welded one to another.

2. Process according to Claim 1, **characterized in that** after the forming and before the crosslinking a seal or a sealing surface of a rubber-like material is positioned on the moulding, which is then vulcanized in the course of the crosslinking process.

3. Process according to Claim 1 or 2, **characterized in that** the polyolefin is fibre-reinforced with long fibres of a length of at least 1 mm.

4. Process according to one of Claims 1 to 3, **characterized in that** the fibres are glass fibres.

5. Process according to Claim 4, **characterized in that** the polyolefin is reinforced with nanotubes or nanoclays.

6. Process according to one of Claims 1 to 5, **characterized in that** the crosslinking is effected by radiation crosslinking.

7. Process according to one of Claims 1 to 6, **characterized in that** screw-threaded sections are formed integrally on the building component from the crosslinked fibre or nanostructure-reinforced polyolefin.

## Revendications

1. Procédé de fabrication d'une pièce de transport d'agents, en particulier une armature, un raccord ou un tuyau, où on façonne d'abord un moule, en particulier par moulage par injection, puis le moule est réticulé, en particulier réticulé par des rayons, **caractérisé en ce que** le moule est façonné à partir d'une polyoléfine extrudable, réticulable, renforcée par des fibres ou des nanostructures, en particulier en polyéthylène, et **en ce qu'**entre l'étape de moulage et l'étape de réticulation, plusieurs moules sont soudés les uns aux autres.

2. Procédé selon la revendication 1, **caractérisé en ce qu'**après le moulage et avant la réticulation, un joint ou, selon le cas, une surface d'étanchéité en un matériau caoutchouteux est agencé(e) sur le moule, qui est ensuite vulcanisé dans le cadre du processus de réticulation.

3. Procédé selon la revendication 1 ou 2, **caractérisé en ce que** la polyoléfine est renforcée par des fibres longues avec des fibres d'une longueur d'au moins 1 mm.

4. Procédé selon l'une quelconque des revendications 1 à 3, **caractérisé en ce que** les fibres sont des fibres de verre.

5. Procédé selon la revendication 4, **caractérisé en ce que** la polyoléfine est renforcée par des nanotubes ou des nanoargiles.

6. Procédé selon l'une quelconque des revendications 1 à 5, **caractérisé en ce que** la réticulation est réalisée au moyen d'une réticulation par des rayons.

7. Procédé selon l'une quelconque des revendications 1 à 6, **caractérisé en ce qu'**on réalise sur la pièce des sections filetées en un morceau en polyoléfine réticulée renforcée par des fibres ou des nanostructures.
